Europäisches Patentamt

European Patent Office

Office européen des brevets

(11) Veröffentlichungsnummer: **0 194 588**
**B1**

(12) **EUROPÄISCHE PATENTSCHRIFT**

(45) Veröffentlichungstag der Patentschrift: 13.06.90

(21) Anmeldenummer: 86102978.3

(22) Anmeldetag: 06.03.86

(51) Int. Cl.⁵: **B 32 B 27/32**, B 32 B 27/18

(54) Bedruckbare und beidseitig siegelbare, biaxial orientierte Polyolefin- Mehrschichtfolie, ihre Herstellung und ihre Verwendung.

(30) Priorität: 15.03.85 DE 3509384

(43) Veröffentlichungstag der Anmeldung:
17.09.86 Patentblatt 86/38

(45) Bekanntmachung des Hinweises auf die
Patenterteilung:
13.06.90 Patentblatt 90/24

(84) Benannte Vertragsstaaten:
BE DE FR GB IT NL

(56) Entgegenhaltungen:
EP-A-0 027 586
EP-A-0 114 312
GB-A-1 563 691
GB-A-1 571 158
GB-A-2 055 688
US-A-4 419 411

(73) Patentinhaber: HOECHST
AKTIENGESELLSCHAFT
Postfach 80 03 20
D-6230 Frankfurt am Main 80 (DE)

(72) Erfinder: Bothe, Lothar, Dr.
Am Heiligenhaus 9
D-6500 Mainz-Gonsenheim (DE)
Erfinder: Crass, Günther
Bachstrasse 7
D-6204 Taunusstein 4 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine beidseitig siegelbare, biaxial orientierte Polyolefinfolie aus drei Schichten, wobei die Basisschicht im wesentlichen aus Propylenpolymeren und die beiden Siegelschichten im wesentlichen aus siegelbaren Olefinpolymeren bestehen, die sich durch eine universelle Brauchbarkeit auf schnell laufenden Verpackungsmaschinen auszeichnet und auch gut bedruckbar ist. Die Erfindung betrifft ferner ein Verfahren zur Herstellung der Folie und ihre Verwendung.

Aus der europäischen Patentanmeldung 0 008 904 ist eine beidseitig siegelbare, biaxial orientierte dreischichtige Polyolefinfolie bekannt, bei der die Basisschicht aus Propylenpolymeren und die beiden Siegelschichten (Außenschichten oder Deckschichten) aus siegelbaren Olefinpolymeren gebildet sind. Diese Polyolefinfolie besitzt zwar eine gute Heißsiegelbarkeit, sie ist jedoch insbesondere nur wenig kraftzfest, nicht bedruckbar und sie läßt auch hinsichtlich Transparenz und Gleiteigenschaften im Hinblick auf schnell laufende Verpackungsmaschinen mehrfach zu wünschen übrig.

Aus der deutschen Offenlegungsschrift 32 47 998 ist eine biaxial orientierte Polyolefinfolie aus drei Schichten bekannt, die transparent und besonders gut siegelbar ist. Ihre Basisschicht besteht im wesentlichen aus einem Propylenpolymeren und die beiden Siegelschichten bestehen aus einem entsprechenden Olefinpolymeren, das als Additive 5 bis 15 Gew.-% eines niedrigmolekularen, mit dem Olefinpolymeren verträglichen Harzes, 5 bis 15 Gew.-% eines Propylenhomopolymeren und 0,3 bis 1,5 Gew.-% Polydiorganosiloxan enthält, Gewichtsprozente jeweils bezogen auf die Siegelschicht. Diese Polyolefin-Mehrschichtfolie besitzt die für Verpackungsfolien wichtigen Eigenschaften, nämlich einen großen Siegelbereich, eine niedrige Siegeltemperatur, hohen Glanz und gute Transparenz, eine relativ hohe Kratzfestigkeit, eine geringe Reibung und damit gute Laufeigenschaften auf schnell laufenden Verpackungsmaschinen unterschiedlichen Typs. Ihr fehlt jedoch die weitere wichtige Eigenschaft, nämlich eine gute Bedruckbarkeit.

Eine beidseitig siegelbare, biaxial orientierte Polyolefinfolie mit drei Schichten ist ferner aus der US-Patentschrift 4 419 411 bekannt. Auch bei dieser Folie ist in beiden Siegelschichten eine Additivkombination inkorporiert. Sie enthalten jeweils 0,15 bis 0,4 Gew.-% Polysiloxan und 0,05 bis 0,5 Gew.-% Siliciumdioxid, Gewichtsprozente jeweils bezogen auf die siegelbare Schicht. Die Basisschicht besteht aus Polypropylen (als Hauptkomponente) und enthält eine geringe Menge Monocarbonsäureamid. Ein Teil des Amids migriert von der Basisschicht in die beiden Siegelschichten und auf deren Oberfläche (äußeren Fläche), so daß in jeder Siegelschicht Polysiloxan, Siliciumdioxid und Monocarbonsäureamid inkorporiert vorliegen und Monocarbonsäureamid auch auf den Außenflächen der beiden Siegelschichten anwesend ist. Die beschriebene Polyolefin-Mehrschichtfolie soll einen besonders niedrigen Reibungskoeffizienten aufweisen. Auch dieser Folie haftet jedoch insbesondere der Nachteil an, daß sie nicht bedruckbar ist.

Der Erfindung liegt demnach die Aufgabe zugrunde, eine biaxial orientierte und beidseitig siegelbare Polyolefinfolie aus drei Schichten zur Verfügung zu stellen, welche die oben erwähnten wichtigen Eigenschaften aufweist und darüber hinaus auch gut bedruckbar ist. Die neue Polyolefin-Mehrschichtfolie soll insbesondere eine gute beidseitige Siegelbarkeit, eine hohe Kratzfestigkeit, hervorragende Laufeigenschaften und eine gute Bedruckbarkeit aufweisen.

Die erfindungsgemäße Polyolefinfolie aus drei Schichten, wobei die Basisschicht im wesentlichen aus Propylenpolymeren, die im wesentlichen aus Propylen bestehen und die beiden Siegelschichten im wesentlichen aus siegelbaren Olefinpolymeren bestehen, ist dadurch gekennzeichnet, daß eine Siegelschicht 0,5 bis 3 Gew.-%, vorzugsweise 0,8 bis 2 Gew.-%, bezogen auf die Schicht, Polydialkylsiloxan inkorporiert enthält und diese Siegelschicht nicht koronabehandelt worden ist, und die andere Siegelschicht koronabehandelt worden ist und Polydialkylsiloxan nicht inkorporiert, sondern auf ihrer Außenfläche vorliegen hat, das beim Kontakt der beiden Siegelschichten übertragen worden ist, wobei die relative Polydialkylsiloxanbelegung der koronabehandelten Außenfläche höchstens 15 beträgt, vorzugsweise 2 bis 10, bestimmt mit Hilfe der ESCA-Spektroskopie (ESCA=Electron Spectroscopy for Chemical Analysis).

Die neue Polyolefinfolie beruht auf einer Reihe von erfinderischen Überlegungen und Handlungen. Indem bei einer der beiden Siegelschichten Polydialkylsiloxan nicht inkorporiert, sondern als Belag (auf ihrer äußeren Oberfläche) anwesend ist und diese Siegelschicht vor der Polydialkylsiloxanbelegung koronabehandelt worden ist, wird erreicht, daß die erfindungsgemäße Folie auf dieser Schicht bedruckbar ist und gleichzeitig auch all die anderen obengenannten wichtigen Eigenschaften besitzt. Die vorliegende Erfindung zeigt also einen Weg, mit dem es in einfacher Weise, nämlich durch Kontakt einer polydialkylsiloxan-inkorporierten Siegelschicht mit der Außenfläche der anderen der beiden Siegelschichten, möglich ist, Koronabehandlung und Polydialkylsiloxananwesenheit in einer Siegelschicht zu kombinieren und die damit angestrebten Effekte (gute Bedruckbarkeit, gute Gleiteigenschaften und gute Siegelbarkeit) gemeinsam zu erreichen, ohne irgendwelche nachteilige Wirkungen auf weitere wichtige Eigenschaften in Kauf nehmen zu müssen.

Die Menge an Polydialkylsiloxan, die auf die Außenfläche einer Siegelschicht übertragen wird, stellt nur einen relativ kleinen Bruchteil des in der anderen Siegelschicht inkorporierten Polydialkylsiloxans dar. Die dem Olefinpolymeren einer Siegelschicht zugesetzte Polydialkylsiloxanmenge von 0,5 bis 3 Gew.-%, vorzugsweise 0,8 bis 2 Gew.-% (Gewichtsprozente bezogen auf das Gesamtgewicht der Schicht),

vermindert sich demnach durch die erwähnte Übertragung nicht wesentlich. Beträgt der Wert der mit Hilfe der ESCA-Spektroskopie gemessenen relativen Belegung der Außenfläche mehr als 15, liegt bereits derart viel Polydialkylsiloxan vor, daß sich beim Einsatz der Folie verfahrenstechnische Probleme ergeben könnten. Andererseits kann es bei sehr kleinen Werten zu einer Beeinträchtigung der Gleitfähigkeit der Folie kommen. Die relative Polydialkylsiloxan-Belegung beträgt demnach vorzugsweise 2 bis 10.

Die genannte Belegung mit Polydialkylsiloxan erfolgt durch Kontakt der beiden Siegelschichten. Kontakt der Siegelschichten liegt beispielsweise vor, wenn die Folie nach ihrer Herstellung bei der dann vorliegenden Temperatur (in der Regel etwa Raumtemperatur) aufgewickelt wird, weil dabei die beiden Siegelschichten unter enger gegenseitiger Berührung aufeinander zu liegen kommen. Die beabsichtigte Übertragung wird zusätzlich noch dadurch gefördert, daß die beiden Siegelschichten mit dem durch das Aufwickeln erzeugten Druck in Kontakt sind. Es hat sich herausgestellt, daß die Polydialkylsiloxan-Übertragung schon nach kurzer Zeit des Kontaktes stattfindet und die geforderte Belegung vorliegt.

Das in einer der beiden Siegelschichten inkorporierte Polydialkylsiloxan hat vorzugsweise 1 bis 4 Kohlenstoffatome in den Alkylgruppen und eine Viskosität von mindestens 100 $mm^2/s$ bei 25°C, vorzugsweise 1000 bis 100 000 $mm^2/s$, insbesondere 5000 bis 50 000 $mm^2/s$ (der Viskositätsbereich von beispielsweise 1000 bis 100 000 $mm^2/s$ bei 25°C entspricht einer mittleren Molmasse von etwa 25 000 bis 103 000). Polydimethylsiloxan ist besonders bevorzugt.

Die Basisschicht der erfindungsgemäßen Mehrschichtfolie besteht aus einem Propylenpolymeren, das zum überwiegenden Teil aus Propylen besteht und einen Schmelzpunkt von 140°C oder höher, vorzugsweise 150 bis 170°C, besitzt.

Isotaktisches Polypropylen mit einem n-heptanlöslichen Anteil von 15 Gew.-% und weniger, Copolymere von Ethylen und Propylen mit einem Ethylengehalt von 10 Gew.-% oder weniger, Copolymere von Propylen mit $C_4$—$C_8$-α-Olefinen mit einem α-Olefin-Gehalt von 10 Gew.-% oder weniger stellen bevorzugte Propylenpolymere für die Basisschicht dar, wobei isotaktisches Polypropylen besonders bevorzugt ist.

Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230°C und 21,6 N Belastung (DIN 53 735).

Die Siegelschichten der erfindungsgemäßen Mehrschichtfolie bestehen aus siegelbaren olefinischen Polymeren. Geeignete Olefinpolymere sind Ethylenhomopolymere, Copolymere aus Ethylen und Propylen, Ethylen oder Propylen und Butylen oder einem anderen α-Olefin mit 5 bis 10 Kohlenstoffatomen, Terpolymere aus Ethylen, Propylen und Butylen oder einem anderen α-Olefin mit 5 bis 10 Kohlenstoffatomen oder Mischungen aus diesen Polymeren. Ethylen-Propylen-Copolymere, Ethylen-Butylen-Copolymere, Propylen-Butylen-Copolymere, Ethylen-Propylen-Butylen-Terpolymere oder Mischungen aus diesen Polymeren werden bevorzugt eingesetzt. Besonders bevorzugte Olefinpolymere für die Siegelschichten sind Ethylen-Propylen-Copolymere mit Propylen als Hauptkomponente und einem Ethylengehalt von 2 bis 10 Gew.-% (bezogen auf das Copolymere), Propylen-Butylen-Copolymere mit Propylen als Hauptkomponente und einem Butylengehalt von 0,5 bis 25 Gew.-% (bezogen auf das Copolymere) und Ethylen-Propylen-Butylen-Terpolymere mit Propylen als Hauptkomponente, 0,5 bis 7 Gew.-% Ethylen und 5 bis 30 Gew.-% Butylen (Gewichtsprozent bezogen auf das Terpolymere) sowie Mischungen aus diesen Polymeren.

Das Olefinpolymere der Siegelschichten hat einen niedrigeren Schmelzpunkt als das Propylenpolymere der Basisschicht. Der Schmelzpunkt des Olefinpolymeren liegt im allgemeinen im Bereich von 80 bis 160°C, vorzugsweise 100 bis 140°C.

Der Schmelzflußindex des Olefinpolymeren liegt höher als jener des Propylenpolymeren der Basisschicht. Das Olefinpolymere für die Siegelschichten hat einen Schmelzflußindex von im allgemeinen 1 bis 12 g/10 min, vorzugsweise 3 bis 9 g/10 min, bei 230°C und 21,6 N Belastung (DIN 53 735).

Zur Koronabehandlung, die nach einer der bekannten Methoden durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 Volt und 10 000 Hertz) angelegt ist, daß Sprüh- oder Koronaentladungen stattfinden können. Durch die Sprüh- oder Koronaentladungen wird die Luft oberhalb der Folienoberfläche ionisiert und verbindet sich mit den Molekülen auf der Folienoberfläche, so daß polare Einlagerungen in der im wesentlichen unpolaren Polymermatrix entstehen. Erfindungsgemäß wird nur jene der beiden Siegelschichten koronabehandelt, bei der das Olefinpolymere kein Polydialkylsiloxan enthält, das ist die nicht polydialkylsiloxan-inkorporierte Siegelschicht.

Um bestimmte Eigenschaften der erfindungsgemäßen Polyolefinfolie noch weiter zu verbessern, können sowohl die Basisschicht als auch die beiden Siegelschichten entsprechende Zusätze in einer jeweils wirksamen Menge enthalten, vorzugsweise Antistatika, Antiblockmittel, Gleitmittel, Stabilisatoren und/oder niedrigmolekulare Harze, die mit dem Polymeren der Basisschicht und der Siegelschichten verträglich sind.

Bevorzugte Antistatika sind Alkali-alkansulfonate, polyethermodifizierte, das sind ethoxylierte und/oder propoxylierte Polydiorganosiloxane (Polydialkylsiloxane, Polyalkylphenylsiloxane und dergleichen) und/oder die im wesentlichen geradkettigen und gesättigten aliphastischen, tertiären Amine mit einem aliphatischen Rest mit 10 bis 20 Kohlenstoffatomen, die mit 2 Hydroxyalkyl-($C_1$—$C_4$)-Gruppen substituiert sind, worunter N,N-bis-(2-hydroxyethyl)-alkylamine mit $C_{10}$—$C_{20}$, vorzugsweise $C_{12}$—$C_{18}$ als Alkylgruppen

3

besonders geeignet sind. Die wirksame Menge an Antistatikum liegt im Bereich von 0,05 bis 3 Gew.-%, bezogen auf die Schicht. Im Falle des Einsatzes von polyethermodifiziertem Polysiloxan wird dieses nur dem Polymeren für die Basisschicht und/oder dem Polymeren jener der beiden Siegelschichten zugesetzt, die als polydialkylsiloxan-inkorporierte Schicht vorgesehen ist.

Geeignete Antiblockmittel sind anorganische Zusatzstoffe, wie Siliciumdioxid, Calciumcarbonat, Magnesiumsilicat, Aluminiumsilicat, Calciumphosphat und dergleichen, nichtionogene Tenside, anionaktive Tenside und/oder unverträgliche organische Polymerisate, wie Polyamide, Polyester, Polycarbonate und dergleichen. Die wirksame Menge an Antiblockmittel liegt im Bereich von 0,1 bis 2 Gew.-%, bezogen auf die Schicht.

Beispiele für Gleitmittel sind höhere aliphatische Säureamide, höhere aliphatische Säureester, Wachse und Metallseifen. Die wirksame Menge an Gleitmittel liegt im Bereich von 0,1 bis 2 Gew.-%, bezogen auf die Schicht.

Als Stabilisatoren können die üblichen stabilisierend wirkenden Verbindungen für Ethylen-, Propylen- und anderen α-Olefinpolymeren eingesetzt werden. Die wirksame Menge beträgt im allgemeinen 0,1 bis 2 Gew.-%, bezogen auf die Schicht.

Bei dem empfohlenen niedrigmolekularen Harz handelt es sich um ein natürliches oder synthetisches Harz mit einem Erweichungspunkt von 60 bis 180°C, vorzugsweise 80 bis 130°C (bestimmt nach ASTM E-28). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Enzyklopädie der Techn. Chemie, 4. Auflage, Band 2, Seiten 539 bis 553, beschrieben).

Die Erdölharze sind solche Kohlenwasserstoffharze, die durch Polymerisation von tiefzersetzten (deepdecomposed) Erdölmaterialien in Gegenwart eines Katalysators hergestellt werden. Diese Erdölmaterialien enthalten gewöhnlich ein Gemisch von harzbildenden Substanzen, wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren, wie α-Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer sehr langen Zeit bei hoher Temperatur gehalten werden. In Abhängigkeit von der Reaktionstemperatur können Dimere, Trimere oder Hochpolymere erhalten werden. Die Terpenharze sind Polymerisate von Terpenen, das heißt Kohlenwasserstoffen der Formel $C_{10}H_{16}$, die in fast allen etherischen Ölen und ölhaltigen Harzen von Pflanzen enthalten sind, und phenolmodifizierte Terpenharze. Als spezielle Beispiele der Terpene sind α-Pinen, β-Pinen, Dipenten, Limonen, Myrcen, Bornylen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomerer oder durch Reaktion des polymerisierten Produktes, wobei insbesondere Hydrierungen oder Teilhydrierungen vorgenommen werden.

Als Kohlenwasserstoffharze werden vorzugsweise Styrolhomopolymerisate, Styrolcopolymerisate, Cyclopentadienhomopolymerisate, Cyclopentadiencopolymerisate und/oder Terpenpolymerisate mit einem Erweichungspunkt von jeweils 60 bis 180°C, vorzugsweise 80 bis 130°C, eingesetzt (bei den ungesättigten Polymerisation ist das hydrierte Produkt bevorzugt).

Die wirksame Menge an niedermolekularem Harz beträgt 3 bis 15 Gew.-%, vorzugsweise 5 bis 10 Gew.-% bezogen auf die Schicht.

Es hat sich als besonders vorteilhaft herausgestellt, das niedrigmolekulare Harz mit einem Propylenhomopolymeren mit einem Schmelzpunkt von bis zu 165°C, vorzugsweise mit einem isotaktischen Polypropylen, in einer Menge von 3 bis 15 Gew.-%, vorzugsweise 5 bis 10 Gew.-%, bezogen auf die Schicht, zu kombinieren, wobei das Harz und das Propylenhomopolymere vorzugsweise in einer jeweils etwa gleichen Menge eingesetzt wird.

Nach einer bevorzugten Ausführungsform der erfindungsgemäßen Polyolefin-Mehrschichtfolie enthält mindestens eine Siegelschicht 3 bis 15 Gew.-%, vorzugsweise 5 bis 10 Gew.-%, von den genannten natürlichen oder synthetischen Harzen mit einem Erweichungspunkt von 80 bis 130°C und 3 bis 15 Gew.-%, vorzugsweise 5 bis 10 Gew.-%, von einem Propylenhomopolymeren mit einem Schmelzpunkt von bis zu 165°C, Gewichtsprozente bezogen auf die Schichten.

Nach einer weiteren bevorzugten Ausführungsform enthält die Basisschicht (in die der Hauptkomponente ein Propylenhomopolymeres ist) und/oder mindestens eine Siegelschicht ein N,N-bis-(2-hydroxyethyl)-($C_{10}$—$C_{20}$)-alkylamin, ein polyethermodifiziertes Polydiorganosiloxan oder eine Mischung dieser beiden als Antistatikum.

Es ist selbstverständlich, daß die beiden Siegelschichten der erfindungsgemäßen Polyolefinfolie prinzipiell aus gleichen oder auch aus unterschiedlichen Polymeren zusammengesetzt sein können.

Sofern es zweckmäßig ist, enthalten die Basisschicht und/oder die Siegelschichten auch die anderen oben erwähnten Zusätze, vorzugsweise Gleitmittel und Antiblockmittel, in einer jeweils wirksamen Menge.

Die Dicke der erfindungsgemäßen Polyolefin-Mehrschichtfolie kann innerhalb weiter Grenzen variieren und richtet sich insbesondere nach dem beabsichtigten Einsatz. Ihre Gesamtdicke beträgt im allgemeinen 10 bis 50 μm, vorzugsweise 20 bis 40 μm, wobei die Siegelschichten, die im allgemeinen die gleiche Dicke haben, jeweils 0,2 bis 3 µm, vorzugsweise 0,5 bis 1,5 µm dick sind (die Dicke der Basisschicht macht etwa 50 bis 90% der Gesamtdicke aus).

Die Herstellung der erfindungsgemäßen, aus drei Schichten gebildeten Polyolefinfolie erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die durch Coextrusion erhaltene Folie zur Verfestigung abgekühlt wird, die Folie biaxial gestreckt (orientiert), die biaxial gestreckte Folie thermofixiert und an der (zur Koronabehandlung) vorgesehenen Siegelschicht koronabehandelt wird. Die biaxiale Streckung (Orientierung) kann simultan oder aufeinanderfolgend durchgeführt werden, wobei die aufeinanderfolgende biaxiale Streckung, bei der zuerst längs (das ist in Maschinenrichtung) und dann quer (das ist quer zur Maschinenrichtung) gestreckt wird, bevorzugt ist. Zunächst wird also wie beim üblichen Coextrusionsverfahren das Polymere oder die Polymermischung der einzelnen Schichten in einem Extruder komprimiert oder verflüssigt. Die Schmelzen werden dann gleichzeitig durch eine Flachdüse (Breitschlitzdüse) gepreßt und die ausgepreßte mehrschichtige Folie wird auf einer oder mehreren Walzen, die durch Kühlung auf etwa 30 bis 50°C gehalten werden, abgekühlt und verfestigt. Die so erhaltene Folie wird dann längs und quer zur Extrusionsrichtung gestreckt, was zu einer Orientierung der Molekülketten führt. In Längsrichtung wird vorzugsweise 4 bis 7:1 und in Querrichtung vorzugsweise 8 bis 10:1 gestreckt. Die Längsstreckung wird bei einer Folientemperatur von vorzugsweise 120 bis 140°C durchgeführt und die Querstreckung vorzugsweise bei 160 bis 175°C. Das Längsstrecken wird man zweckmäßigerweise mit Hilfe zweier, entsprechend dem angestrebten Streckverhältnis verschieden schnell laufender Walzen durchführen und das Querstrecken mit Hilfe eines entsprechenden Kluppenrahmens. An die biaxiale Streckung der Folie schließt sich ihre Thermofixierung (Wärmebehandlung) an. Dabei wird die Folie etwa 0,5 bis 10 Sekunden lang bei einer Temperatur von 150 bis 160°C gehalten. Die Koronabehandlung erfolgt vorzugsweise mit einer Wechselspannung von etwa 10 000 Volt und 10 000 Hertz. Die so hergestellte Folie wird in üblicher Weise mit Hilfe einer Aufwickeleinrichtung aufgewickelt.

Die erfindungsgemäße Polyolefin-Mehrschichtfolie eignet sich insbesondere als Verpackungsfolie auf schnell laufenden Verpackungsmaschinen. Sie besitzt nämlich all die wichtigen Eigenschaften, die von Polyolefinfolien im Hinblick auf den Einsatz auf schnell laufenden Maschinen gefordert werden. Sie weist insbesondere eine beidseitige Siegelbarkeit, hohe Kratzfestigkeit, hervorragende Laufeigenschaften und gleichzeitig eine gute Bedruckbarkeit auf.

Die Erfindung wird nun an Beispielen noch näher erläutert:

In den nachstehenden Beispielen und Vergleichsbeispielen handelt es sich jeweils um eine biaxial orientierte (Längsstreckverhältnis 5:1, Querstreckverhältnis 10:1) Polyolefinfolie mit einer Basisschicht und zwei Siegelschichten, wobei die Basisschicht aus einem isotaktischen Polypropylen mit einem n-heptanlöslichen Anteil von 5 Gew.-%, mit einem Schmelzpunkt von 165°C und einem Schmelzflußindex von 2 g/10 min bei 230°C und 21,6 N Belastung (DIN 53 735) als Hauptkomponente besteht. Die Basisschicht ist etwa 19 µm dick und die beiden Siegelschichten, welche die Basisschicht umgeben, sind jeweils etwa 1 µm dick. Die dreischichtigen Polyolefinfolien sind nach dem bekannten Coextrusionsverfahren hergestellt worden.

**Beispiel 1**

Eine Siegelschicht besteht aus einem (statistischen) Ethylen-Propylen-Copolymeren mit 4,5 Gew.-% Ethylen, dem 0,8 Gew.-% Polydimethylsiloxan mit einer Viskosität von 30 000 mm²/s bei 25°C zugesetzt worden ist. Diese Siegelschicht ist also aus 99,2 Gew.-% von dem genannten Copolymeren (aus 95,5 Gew.-% Propylen und 4,5 Gew.-% Ethylen) und 0,8 Gew.-% von dem genannten Polysiloxan gebildet. Die andere Siegelschicht besteht aus dem gleichen Ethylen-Propylen-Copolymeren und enthält kein Polysiloxan inkorporiert. Diese Siegelschicht ist koronabehandelt worden. Nach der Herstellung und Aufwicklung der dreischichtigen Polyolefinfolie ist auf der koronabehandelten Siegelschicht mit Hilfe der ESCA-Spektroskopie eine relative Polydimethylsiloxan-Belegung von 4 gemessen worden.

**Beispiel 2**

Eine Siegelschicht besteht aus einem Polymergemisch aus 50 Gew.-% eines Propylen-Butylen-Copolymeren und 50 Gew.-% eines Ethylen-Propylen-Butylen-Terpolymeren, das einen Gehalt von 0,7 Gew.-% Ethylen, 81,3 Gew.-% Propylen und 18 Gew.-% Butylen (Gewichtsprozente bezogen auf das Polymergemisch) hat, und 1,5 Gew.-% Polydimethylsiloxan mit einer Viskosität von 30 000 mm²/s bei 25°C. Diese Siegelschicht ist also aus 98,5 Gew.-% von dem genannten Polymergemisch und 1,5 Gew.-% von dem genannten Polysiloxan gebildet. Die andere Siegelschicht besteht aus dem gleichen Polymergemisch und enthält kein Polysiloxan inkorporiert. Diese Siegelschicht ist koronabehandelt worden. Nach der Herstellung und Aufwicklung der dreischichtigen Polyolefinfolie ist auf der koronabehandelten Siegelschicht mit Hilfe der ESCA-Spektroskopie eine relative Polydimethylsiloxan-Belegung von 7 gemessen worden.

**Beispiel 3**

Eine Siegelschicht besteht aus dem im Beispiel 2 genannten Polymergemisch und 2 Gew.-% Polydimethylsiloxan der Viskosität 30 000 mm²/s bei 25°C. Die andere Siegelschicht entspricht der koronabehandelten Siegelschicht des Beispiels 1. Die relative Polydimethylsiloxan-Belegung hat den Wert 10.

Beispiel 4

Eine Siegelschicht besteht aus einem (statistischen) Ethylen-Propylen-Copolymeren mit 4,5 Gew.-% Ethylen, wie im Beispiel 1 als Hauptkomponente, 0,5 Gew.-% Polydimethylsiloxan mit der Viskosität 5 000 $mm^2/s$ bei 25°C, 10 Gew.-% von einem isotaktischen Polypropylen mit einem n-heptanlöslichen Anteil von 4,5 Gew.-%, mit einem Schmelzpunkt von 160°C und einem Schmelzflußindex von 3 g/10 min bei 230°C und 2,16 kP Belastung und aus 10 Gew.-% von einem hydrierten Polycyclopentadienharz mit einem Erweichungspunkt von 125°C. Die andere Siegelschicht entspricht der koronabehandelten Schicht des Beispiels 1. Die relative Polydimethylsiloxan-Belegung hat den Wert 2.

Beispiel 5

Eine Siegelschicht besteht aus einem Polymergemisch, wie im Beispiel 2 als Hauptkomponente, 3 Gew.-% Polydimethylsiloxan mit der Viskosität 50 000 $mm^2/s$ bei 25°C, 10 Gew.-% von einem isotaktischen Polypropylen mit ein n-heptanlöslichen Anteil von 4,5 Gew.-%
mit einem Schmelzpunkt von 165°C und einem Schmelzflußindex von 3 g/10 min bei 230°C und 2,16 kP Belastung und aus 10 Gew.-% von einem hydrierten Kohlenwasserstoffharz aus Vinyltoluol, α-Methylstyrol und Inden mit einem Erweichungspunkt von 125°C. Die andere Siegelschicht entspricht der koronabehandelten Schicht des Beispiels 2. Die relative Polydimethylsiloxan-Belegung hat den Wert 14.

Vergleichsbeispiel 1

Es werden Siegelschichten entsprechend Beispiel 1 der deutschen Offenlegungsschrift 3 247 998 eingesetzt.

Vergleichsbeispiel 2

Es werden Siegelschichten entsprechend Beispiel 4 der US-Patentschrift 4 419 411 eingesetzt.
Bestimmung der relativen Polydialkylsiloxan-Belegung
Die relative Polydialkylsiloxan-Belegung der Oberfläche der koronabehandelten Siegelschicht wurde mit Hilfe der ESCA-Spektroskopie bestimmt (ESCA=Electron Spectroscopy for Chemical Analysis). Bei der ESCA-Spektroskopie handelt es sich um eine oberflächenspezifische Analysenmethode, wobei die kinetische Energie der Elektronen gemessen wird, die eine Oberfläche unter dem Einfluß von Röntgenstrahlen emittiert. Die Bestimmung erfolgte mit Proben der fertigen, in üblicher Weise aufgewickelten Folie, nachdem sie im aufgewickelten Zustand bei Raumtemperatur mindestens 60 min lang gelegen hatte. Die Linien des ESCA-Spektrums werden nach den emittierten Energie-Niveaus benannt. Die Fläche unter einer ESCA-Linie ist der Konzentration des entsprechenden Elementes auf der Oberfläche proportional. Aus der Angabe des Flächenverhältnisses der $Si2p_{3/2}$-Linie zur $C1s_{1/2}$-Linie ergibt sich demnach die relative Polydialkylsiloxan-Belegung der Oberfläche (RSO) mit:

$$RSO = 40 \frac{F_{Si2p3/2}}{F_{C1s1/2}}$$

wobei $F_{Si2p3/2}$ die Fläche unter der $Si2p_{3/2}$-Linie und $F_{C1s1/2}$ die Fläche unter der $C1s_{1/2}$-Linie ist. Bei dem Faktor 40 handelt es sich um einen relativen Signalintensitätsfaktor.
Die Messungen wurden mit dem ESCA-Gerät "ESCA 36 Photoelectron-Spektrometer" der Firma McPherson, USA, durchgeführt.

Bestimmung der Kratzfestigkeit (Kratzempfindlichkeit)

Die Kratzfestigkeit wird in Anlehnung an DIN 53 754 bestimmt. Für die Bestimmung der Kratzfestigkeit wird das Abriebmeßgerät 11 671 der Firma Frank (BR Deutschland) benutzt, wobei Reibräder der Marke CALIBRASE® CS-10F, Fa. Teledyne, Taber, USA, die mit 250 g belastet werden, eingesetzt werden. Unter Kratzfestigkeit beziehungsweise Kratzempfindlichkeit versteht man die Trübungszunahme der verkratzten Folie im Vergleich zur Originalfolie nach 50 Umdrehungen des Probentellers.

Bestimmung der Siegelfestigkeit

Zwei 15 mm breite Streifen wurden übereinander gelegt und bei 130°C, einer Siegelzeit von 0,1 s und einem Siegeldruck von 1,5 $N/cm^2$ versiegelt. Die Siegelfestigkeit wurde nach der T-Peel-Methode bestimmt.
In der nachstehenden Tabelle sind die Eigenschaften der dreischichtigen Polyolefinfolien der Beispiele und Vergleichsbeispiele zusammengefaßt.
Wie die Ergebnisse zeigen, sind die erfindungsgemäßen dreischichtigen Polyolefinfolien jenen des Standes der Technik deutlich überlegen. Nur die erfindungsgemäßen Folien erfüllen die hohen Forderungen bezüglich beidseitiger Siegelbarkeit, Kratzfestigkeit und Laufeigenschaften (Maschinengängigkeit) bei gleichzeitig guter Bedruckbarkeit, und zeichnen sich somit durch universelle Brauchbarkeit auf schnellaufenden Verpackungsmaschinen aus.

## EP 0 194 588 B1

### TABELLE

| Folieneigenschaften | Siegelbarkeit Seite 1* | Siegelbarkeit Seite 2 | Kratz-festigkeit | Maschinen-gängigkeit | Bedruck-barkeit |
|---|---|---|---|---|---|
| Beispiel 1 | + | + | + | + | + + |
| Beispiel 2 | + | + + | ± | + | + + |
| Beispiel 3 | + | + + | ± | + | + + |
| Beispiel 4 | + | + | + + | + + | + + |
| Beispiel 5 | + + | + + | + + | + + | + + |
| Vergleichs-beispiel 1 | – | + + | + + | + + | + |
| Vergleichs-beispiel 2 | – | + | ± | + | + |

In der Tabelle bedeuten:
+ gut
+ + sehr gut
± genügend
– ungenügend
* Seite 1 = koronabehandelt

## Patentansprüche

1. Beidseitig siegelbare, biaxial orientierte Polyolefinfolie aus drei Schichten, wobei die Basisschicht im wesentlichen aus Propylenpolymeren, die im wesentlichen aus Propylen bestehen und die beiden Siegelschichten im wesentlichen aus siegelbaren Olefinpolymeren bestehen, dadurch gekennzeichnet, daß eine Siegelschicht 0,5 bis 3 Gew.-%, bezogen auf das Gewicht der Schicht, Polydialkylsiloxan inkorporiert enthält und diese Siegelschicht nicht koronabehandelt worden ist und daß die andere Siegelschicht koronabehandelt worden ist und Polydialkylsiloxan nicht inkorporiert, sondern auf ihrer Außenfläche vorliegen hat, das beim Kontakt der beiden Siegelschichten übertragen worden ist, wobei die relative Polydialkylsiloxan-Belegung der koronabehandelten Außenfläche höchstens 15 beträgt, bestimmt mit Hilfe der ESCA-Spektroskopie.

2. Polyolefinfolie nach Anspruch 1, dadurch gekennzeichnet, daß die Menge an inkorporiertem Polydialkylsiloxan 0,8 bis 2 Gew.-% beträgt.

3. Polyolefinfolie nach den Ansprüchen 1 oder 2, dadurch gekennzeichnet, daß die relative Polydialkylsiloxan-Belegung 2 bis 10 beträgt.

4. Polyolefinfolie nach einem oder mehreren der Ansprüche 1 bis 3, dadurch gekennzeichnet, daß das Polydialkylsiloxan ein Polydimethylsiloxan mit einer Viskosität von 1000 bis 100 000 $mm^2$/s bei 25°C ist.

5. Polyolefinfolie nach einem oder mehreren der Ansprüche 1 bis 4, dadurch gekennzeichnet, daß das Olefinpolymere der Siegelschichten ein Ethylen-Propylen-Copolymeres, Ethylen-Butylen-Copolymeres, Propylen-Butylen-Copolymeres, Ethylen-Propylen-Butylen-Terpolymeres oder eine Mischung aus zwei oder mehreren dieser Polymeren ist.

6. Polyolefinfolie nach einem oder mehreren der Ansprüche 1 bis 5, dadurch gekennzeichnet, daß mindestens eine Siegelschicht 3 bis 15 Gew.-% von einem natürlichen oder synthetischen Harz mit einem Erweichungspunkt von 80 bis 130°C und 3 bis 15 Gew.-% von einem Propylenhomopolymeren mit einem Schmelzpunkt von bis zu 165°C enthält, Gewichtsprozente bezogen auf das Gewicht der Schicht.

7. Polyolefinfolie nach einem oder mehreren der Ansprüche 1 bis 6, dadurch gekennzeichnet, daß die Basisschicht und/oder mindestens eine Siegelschicht ein N,N-bis-(2-hydroxyethyl)-($C_{10}$—$C_{20}$)-alkylamin, ein polyethermodifiziertes Polydiorganosiloxan oder eine Mischung dieser beiden als Antistatikum enthält.

8. Polyolefinfolie nach einem oder mehreren der Ansprüche 1 bis 7, dadurch gekennzeichnet, daß die Basisschicht N,N-bis-(2-hydroxyethyl)-($C_{10}$—$C_{20}$)-alkylamin in einer Menge im Bereich von 0,05 bis 3 Gew.-%, bezogen auf das Gesamtgewicht der Basisschicht, enthält und daß die beiden Siegelschichten Siliziumdioxid in einer Menge von 0,1 bis 2 Gew.-%, bezogen auf das Gesamtgewicht der Siegelschichten, enthalten.

9. Polyolefinfolie nach einem oder mehreren der Ansprüche 1 bis 8, dadurch gekennzeichnet, daß ihre Dicke 10 bis 50 µm beträgt, wobei die Siegelschichten jeweils 0,2 bis 3 µm dick sind.

7

10. Verfahren zur Herstellung der Polyolefinfolie nach Anspruch 1, dadurch gekennzeichnet, daß die den einzelnen Schichten der Folie entsprechenden Schmelzen durch eine Flachdüse coextrudiert werden, die coextrudierte Folie zur Verfestigung abgekühlt wird, die Folie biaxial gestreckt wird mit einem Längsstreckverhältnis von 4 bis 7:1 und einem Querstreckverhältnis von 8 bis 10:1, die biaxial gestreckte Folie thermofixiert, gemäß Anspruch 1 koronabehandelt und anschließend aufgewickelt wird.

11. Verwendung der Polyolefinfolie nach den Ansprüchen 1 bis 9 als Verpackungsfolie auf schnellaufenden Verpackungsmaschinen.

**Revendications**

1. Pellicule à base de polyoléfine, orientée biaxialement, soudable des deux côtés, constituée de trois couches, la couche de base étant essentiellement constituée de polymères de propylène qui consistent essentiellement en propylène et les deux couches de soudure étant essentiellement constituées de polymères oléfiniques soudables, caractérisée en ce qu'une couche de soudure contient incorporés de 0,5 à 3% en poids par rapport au poids de la couche, de polydialkylsiloxane, et cette couche de soudure n'a pas été traitée par effet couronne, et en ce que l'autre couche de soudure a été traitée par effet couronne et comporte, non incorporé mais présent sur sa face externe, du polydialkylsiloxane qui a été transféré lors du contact des deux couches de soudure, le recouvrement relatif par le polydialkylsiloxane de la surface externe traitée par effet couronne, déterminé à l'aide de la spectroscopie ESCA, étant de 15 au maximum.

2. Pellicule à base de polyoléfine selon la revendication 1, caractérisée en ce que la quantité de polydialkylsiloxane incorporé est de 0,2 à 2% en poids.

3. Pellicule à base de polyoléfine selon la revendication 1 ou 2, caractérisée en ce que le recouvrement relatif par le polydialkylsiloxane est de 2 à 10.

4. Pellicule à base de polyoléfine selon une ou plusieurs des revendications 1 à 3, caractérisée en ce que le polydialkylsiloxane est un polydiméthylsiloxane ayant une viscosité de 1 000 à 100 000 mm$^2$/s à 25°C.

5. Pellicule à base de polyoléfine selon une ou plusieurs des revendications 1 à 4, caractérisée en ce que le polymère oléfinique des couches de soudure est un copolymère éthylène/propylène, un copolymère éthylène/butylène, un copolymère propylène/butylène, un terpolymère éthylène/propylène/butylène ou un mélange de deux de ces polymères ou plus.

6. Pellicule à base de polyoléfine selon une ou plusieurs des revendications 1 à 5, caractérisée en ce qu'au moins une couche de soudure contient de 3 à 15% en poids d'une résine naturelle ou synthétique ayant un point de ramollissement de 80 à 130°C, et de 3 à 15% en poids d'un homopolymère de propylène ayant un point de fusion allant jusqu'à 165°C, les pourcentages étant par rapport au poids de la couche.

7. Pellicule à base de polyoléfine selon une ou plusieurs des revendications 1 à 6, caractérisée en ce que la couche de base et/ou au moins une couche de soudure contient (contiennent) une N,N-bis-(2-hydroxyéthyl)-alkyl($C_{10}$—$C_{20}$)-amine, un polydiorganosiloxane modifié par un polyéther, ou un mélange de ces deux composés, en tant qu'agent antistatique.

8. Pellicule à base de polyoléfine selon une ou plusieurs des revendications 1 à 7, caractérisée en ce que la couche de base contient une N,N-bis-(2-hydroxyéthyl)-alkyl-($C_{10}$—$C_{20}$)-amine en une quantité dans la plage de 0,05 à 3% en poids, par rapport au poids total de la couche de base, et en ce que les deux couches de soudure contiennent du dioxyde de silicium en une quantité de 0,1 à 2% en poids, par rapport au poids total des couches de soudure.

9. Pellicule à base de polyoléfine selon une ou plusieurs des revendications 1 à 8, caractérisée en ce que son épaisseur est de 10 à 50 μm, les couches de soudure ayant chacune une épaisseur de 0,2 à 3 μm.

10. Procédé pour la fabrication de la pellicule à base de polyoléfine selon la revendication 1, caractérisé en ce que les masses fondues correspondant aux couches individuelles de la pellicule sont coextrudées à travers une filière plate, la feuille coextrudée est refroidie pour la solidification, la feuille est étirée biaxialement à un rapport d'étirage longitudinal de 4:1 à 7:1 et à un rapport d'étirage transversal de 8:1 à 10:1, la pellicule étirée biaxialement est thermofixée, traitée par effet couronne selon la revendication 1, et ensuite enroulée.

11. Utilisation de la pellicule à base de polyoléfine selon les revendications 1 à 9, en tant que pellicule d'emballage sur des machines d'emballage à grande vitesse.

**Claims**

1. A biaxially oriented polyolefin film which can be sealed on both sides and is composed of three layers, the base layer being essentially composed of propylene polymers essentially comprising propylene units and the two sealing layers being essentially composed of sealable olefin polymers, characterized in that one sealing layer contains 0.5 to 3% by weight, relative to the weight of the layer, of incorporated polydialkylsiloxane, and in that this sealing layer has not been subjected to corona treatment, and that the other sealing layer has been subjected to corona treatment and has polydialkylsiloxane, not incorporated, but present on its outer surface, the polydialkylsiloxane having been transferred by contact between the two sealing layers, and the relative polydialkylsiloxane occupancy of the corona-treated outer face being not more than 15, determined by means of ESCA spectroscopy.

2. The polyolefin film as claimed in claim 1, wherein the amount of incorporated polydialkylsiloxane is 0.8 to 2% by weight.

3. The polyolefin film as claimed in claim 1 or 2, wherein the relative polydialkylsiloxane occupancy is 2 to 10.

4. The polyolefin film as claimed in one or several of claims 1 to 3, wherein the polydialkylsiloxane is a polydimethylsiloxane having a viscosity of 1,000 to 100,000 $mm^2$/second at 25°C.

5. The polyolefin film as claimed in one or several of claims 1 to 4, wherein the olefin polymer of the sealing layers is an ethylene/propylene copolymer, ethylene/butylene copolymer, propylene/butylene copolymer, ethylene/propylene/butylene terpolymer or a mixture of two or more of these polymers.

6. The polyolefin film as claimed in one or several of claims 1 to 5, wherein at least one sealing layer contains 3 to 15% by weight of a natural or synthetic resin having a softening point of 80 to 130°C and 3 to 15% by weight of a propylene homopolymer having a melting point of up to 165°C, the percentages by weight relating to the weight of the layer.

7. The polyolefin film as claimed in one or several of claims 1 to 6, wherein the base layer and/or at least one sealing layer contain(s) an N,N-bis-(2-hydroxyethyl)-($C_{10}$—$C_{20}$)-alkylamine, a polyether-modified polydiorganosiloxane or a mixture of both of these as an antistatic agent.

8. The polyolefin film as claimed in one or several of claims 1 to 7, wherein the base layer contains an N,N-bis-(2-hydroxyethyl)-($C_{10}$—$C_{20}$)-alkylamine in an amount of 0.05 to 3% by weight, relative to the total weight of the base layer, and the two sealing layers contain silicon dioxide in an amount of 0.1 to 2% by weight, relative to the total weight of the sealing layers.

9. The polyolefin film as claimed in one or several of claims 1 to 8, which has a thickness of 10 to 50 μm, the sealing layers each being 0.2 to 3 μm thick.

10. A process for the preparation of the polyolefin film claimed in claim 1, which comprises coextruding the melts corresponding to the individual layers of the film through a flat die, cooling the coextruded film to solidify it, stretching the film biaxially at a longitudinal stretching ratio of (4 to 7):1 and a transverse stretching ratio of (8 to 10):1, heat-setting the biaxially stretched film, subjecting it to corona treatment as claimed in claim 1 and then winding it up.

11. The use of the polyolefin film as claimed in claims 1 to 9 as a packaging film on high-speed packaging machines.